# FASCICULE DE BREVET EUROPEEN

(11) **EP 2 679 478 B1**
(45) Date de publication et mention de la délivrance du brevet: **21.10.2015**
(21) Numéro de dépôt: 13173665.4
(22) Date de dépôt: 25.06.2013
(51) Int. Cl.: B62K 25/02

(54) **Système de fixation d 'un accessoire sur un vélo**
Befestigungssystem eines Zubehörteils auf einem Fahrrad
System for fixing an accessory to a bicycle

(30) Priorité: 27.06.2012 FR 1256134
(43) Date de publication de la demande: 01.01.2014
(73) Titulaire: DECATHLON, 59650 Villeneuve d'Ascq (FR)
(72) Inventeur: Dauchy, Clément, 62130 Herlincourt (FR); Petitdemange, David, 59139 Wattignies (FR); Bretaudeau, Eric, 59110 La Madeleine (FR)
(74) Mandataire: Sayettat, Julien Christian

(56) Documents cités:
- EP-A2- 1 964 767
- GB-A- 658 726
- US-A- 5 653 512

## Description

L'invention concerne un système de fixation d'un accessoire entre deux montants, un accessoire comprenant un tel système de fixation et un vélo comprenant deux montants entre lesquels un tel accessoire est fixé.

Elle s'applique notamment à la fixation d'une roue entre les montants d'une fourche et/ou des haubans arrière d'un vélo, ou à la fixation d'une selle ou d'un guidon sur le cadre dudit vélo.

Le document EP 1964767, qui est considéré comme l'état de la technique le plus proche, décrit les caractéristiques du préambule de la revendication 1.

On connait du document GB-658 726 un système de fixation d'un accessoire sur un vélo comprenant une tige destinée à être montée coulissante entre deux montants solidaires dudit vélo, ladite tige comprenant une première et une deuxième extrémités pourvues respectivement d'un écrou et d'un dispositif de serrage.

Le dispositif de serrage comprend un levier à came solidaire de la deuxième extrémité de la tige, ainsi qu'une rondelle montée autour de ladite deuxième extrémité et présentant une empreinte sur laquelle la came est disposée en appui.

Pour fixer un accessoire à un vélo au moyen d'un tel système, l'utilisateur dispose l'accessoire équipé du système entre des montants dudit vélo avec la tige montée coulissante entre eux, la rondelle et l'écrou étant disposés sur l'extérieur de respectivement un montant. Ensuite, il visse l'écrou pour rattraper le jeu de montage du système, afin d'assurer le maintien de l'accessoire sur les montants. Enfin, il fait pivoter le levier suivant un axe perpendiculaire à l'axe de la tige afin de déplacer la deuxième extrémité de la tige par rapport à la rondelle d'une position desserrée à une position de serrage sur les montants.

Cependant, ces systèmes ne donnent pas entière satisfaction, en ce qu'ils nécessitent une certaine pratique pour être correctement mis en oeuvre, notamment relativement au vissage de l'écrou. Par exemple, si l'utilisateur ne visse pas assez l'écrou, le système n'est pas correctement fixé et l'accessoire risque, durant l'utilisation du vélo, de se déplacer par rapport aux montants, voire, s'agissant d'une roue, de se détacher desdits montants, ce qui présente un risque important pour la sécurité dudit utilisateur.

De même, si l'utilisateur visse trop l'écrou, il peut avoir des difficultés pour mettre la came en position de serrage et le système n'est alors pas correctement fixé, ce qui compromet également la sécurité de l'utilisateur.

Par ailleurs, pour démonter l'accessoire, l'utilisateur met la came en position desserrée, mais n'obtient souvent pas assez de jeu pour pouvoir retirer l'accessoire des montants. Par conséquent, il doit aussi dévisser l'écrou, parfois jusqu'au bout de la première extrémité de la tige, ce qui est relativement fastidieux.

Pour résoudre ces problèmes, on connaît du document US-5 653 512 un système de fixation d'une roue à une fourche de vélo comprenant une rondelle montée autour de la première extrémité et en regard de l'écrou, ladite rondelle présentant deux empreintes respectivement inférieure et supérieure perpendiculaires entre elles et qui définissent pour ledit écrou une position respectivement de montage et de maintien de la roue sur la fourche, la position de montage fournissant un jeu adéquat pour le montage et le démontage de l'accessoire.

En pratique, après avoir placé le système sur les montants, l'utilisateur fait tourner manuellement la rondelle suivant l'axe de la tige, de sorte à disposer l'écrou dans l'empreinte supérieure et ainsi rattraper le jeu de montage, puis il fait pivoter le levier autour de son axe pour mettre la came en position de serrage et ainsi fixer l'accessoire.

Cependant, ce système ne donne pas non plus entière satisfaction, en ce qu'il nécessite une manipulation supplémentaire au niveau de l'écrou, soit sur l'extrémité de la tige qui est opposée au dispositif de serrage, ce qui n'est pas intuitif, en particulier pour un utilisateur non expérimenté. En outre, l'utilisateur doit utiliser ses deux mains pour manipuler chacune des extrémités.

L'invention vise à perfectionner l'art antérieur en proposant notamment un système de fixation d'un accessoire sur deux montants qui soit simple, intuitif et rapide à mettre en oeuvre, notamment en permettant à l'utilisateur de n'utiliser qu'une seule main.

A cet effet, selon un premier aspect, l'invention propose un système de fixation d'un accessoire sur deux montants, ledit système comprenant une tige destinée à être montée coulissante entre lesdits montants, ladite tige comprenant une extrémité pourvue d'un dispositif de serrage qui comprend un levier à came solidaire de l'extrémité de la tige et une rondelle montée autour de ladite extrémité, ladite rondelle présentant une empreinte supérieure sur laquelle la came est destinée à être disposée en appui, la came étant agencée pour qu'une rotation du levier suivant un axe perpendiculaire à l'axe de la tige induise un déplacement de l'extrémité par rapport à la rondelle entre une position de serrage et une position desserrée, la rondelle comprenant une empreinte inférieure décalée angulairement par rapport à l'empreinte supérieure et présentant une épaisseur inférieure à celle de ladite empreinte supérieure, la came en position desserrée étant déplaçable réversiblement sur l'empreinte inférieure par rotation du levier suivant l'axe de la tige dans une position de montage de l'accessoire sur les montants.

Selon un deuxième aspect, l'invention propose un accessoire comprenant un tel système de fixation, ledit accessoire étant monté sur la tige pour pouvoir être fixé entre les montants.

Selon un troisième aspect, l'invention propose un vélo comprenant deux montants entre lesquels un tel accessoire est fixé.

D'autres particularités et avantages de l'invention apparaîtront dans la description qui suit, faite en référence aux figures annexées, dans lesquelles :
- la figure 1 est une représentation schématique en perspective éclatée d'un système de fixation selon l'invention ;
- la figure 2 est une représentation schématique en perspective assemblée du système de la figure 1 lorsqu'il est fixé sur des montants d'un vélo ;
- la figure 3 est une représentation partielle du montant de la figure 2 sur lequel est montée l'extrémité de la tige portant le dispositif de serrage ;
- la figure 4 est une représentation schématique en perspective de la deuxième extrémité de la tige et du dispositif de serrage lorsque le système est en position de serrage ;
- la figure 5 est une représentation schématique en vue de côté de la deuxième extrémité de la tige et du dispositif de serrage lorsque le système est en position de montage ;

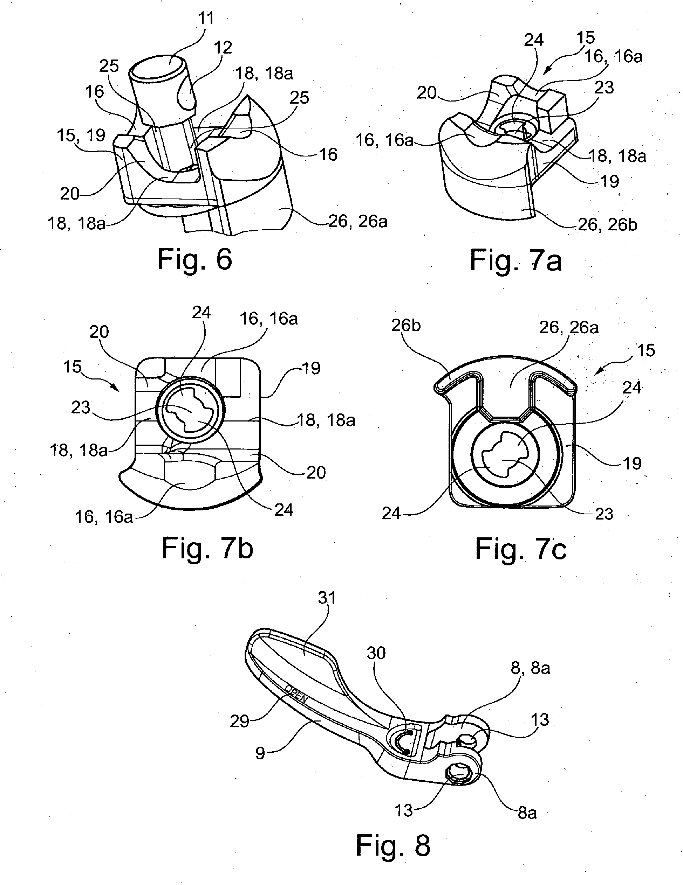

- la figure 6 est une représentation schématique en perspective du montage de la rondelle autour de la deuxième extrémité de la tige, le dispositif de serrage n'étant pas représenté ;
- les figures 7 sont des représentations schématiques de la rondelle, respectivement en perspective (figure 7a), en vue de dessus (figure 7b) et en vue de dessous (figure 7c) ;
- la figure 8 est une représentation schématique en perspective du levier à came.

En relation avec ces figures, on décrit ci-dessous un système de fixation d'un accessoire sur deux montants 2, ledit système comprenant une tige 1 destinée à être montée coulissante entre lesdits montants.

En particulier, l'accessoire peut être une roue de vélo qui comprend un moyeu dans lequel la tige 1 du système est destinée à être montée pour permettre la fixation de ladite roue entre les montants 2 d'une fourche ou des haubans arrières du vélo.

En variante, l'accessoire peut être une selle ou un guidon et peut comprendre un tube inférieur destiné à être monté coulissant dans un tube du cadre du vélo. Pour permettre la fixation d'un tel accessoire, le système peut comprendre en outre une bague déformable par serrage et présentant deux extrémités libres qui forment chacune un montant, le tube inférieur dudit accessoire étant disposé dans ladite bague pour être fixé sur le vélo par déformation de ladite bague.

La tige 1 comprend une première extrémité 1a pourvue d'un écrou 3 qui est déplaçable par vissage le long de ladite première extrémité pour permettre un réglage préalable du système conformément aux dimensions de l'écartement entre les montants 2 du vélo, un tel réglage pouvant par exemple être effectué en usine avant la commercialisation d'un accessoire pourvu dudit système, ou encore par l'utilisateur pour adapter ledit système aux dimensions d'un autre vélo. En particulier, l'écrou 3 peut être un écrou de type hexagonal auto-freiné (HFR).

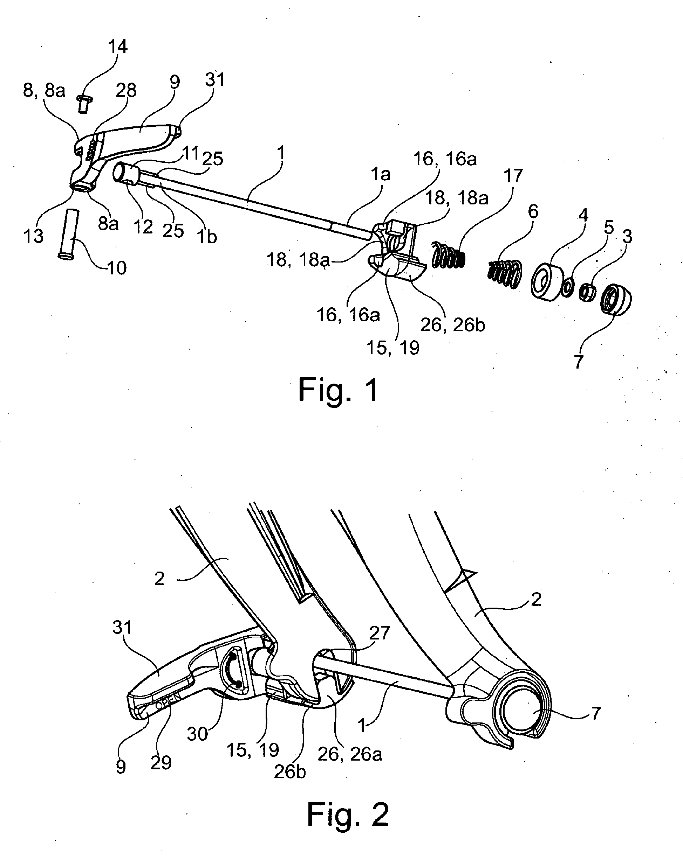

En relation avec la figure 1, le système comprend une bague métallique 4 montée par vissage autour de la première extrémité 1 a de la tige 1. La bague 4 comprend une face extérieure sur laquelle l'écrou 3 est en appui par l'intermédiaire d'une rondelle métallique 5, par exemple de type Z5, afin d'éviter le desserrage de ladite bague. La bague 4 comprend également une face intérieure sur laquelle un ressort 6 est disposé en appui, ledit ressort permettant, lorsqu'il est à l'état étendu, d'écarter ladite bague du montant 2 en regard duquel ladite bague est disposée. En outre, pour éviter tout déréglage intempestif par l'utilisateur, un plot 7 est fixé par emboitage sur la face extérieure de la bague métallique 4 et autour dudit écrou, ce qui permet également de cacher ledit écrou et d'améliorer l'esthétique.

La tige 1 comprend en outre une deuxième extrémité 1b pourvue d'un dispositif de serrage, ledit dispositif comprenant un levier 9 à came 8 solidaire de la deuxième extrémité 1 b de la tige 1.

En relation avec les figures, la came 8 et le levier 9 sont formés d'une seule pièce. Selon une variante non représentée, la came 8 et le levier 9 peuvent former deux pièces distinctes.

Par ailleurs, la came 8 comprend deux portées 8a disposées de part et d'autre de la deuxième extrémité 1b de la tige 1 et solidarisées à ladite deuxième extrémité par un pivot 10 d'axe perpendiculaire à l'axe de la tige 1.

Pour ce faire, la deuxième extrémité 1b de la tige 1 comprend une tête 11 qui est destinée à être disposée entre les portées 8a de la came 8 et qui comprend un alésage transversal 12, chaque portée 8a comprenant un alésage central 13 de diamètre sensiblement égal à celui de l'alésage 12. Ainsi, pour fixer le levier 9 à came 8 à la deuxième extrémité 1 b, les portées 8a sont disposées de part et d'autre de la tête 11 avec leurs alésages 13 respectifs en face de l'alésage 12 de ladite tête, puis un pivot 10 est inséré et immobilisé dans lesdits alésages au moyen d'un rivet 14.

Le dispositif de serrage comprend en outre une rondelle 15 montée autour de la deuxième extrémité 1b et présentant une empreinte supérieure 16 sur laquelle la came 8 est destinée à être disposée en appui, ladite came étant agencée pour qu'une rotation du levier 9 suivant un axe perpendiculaire à l'axe de la tige 1 induise un déplacement de la deuxième extrémité 1b par rapport à la rondelle 15 entre une position de serrage et une position desserrée. Ce déplacement permet à l'utilisateur de rattraper - respectivement créer - un jeu entre le système et les montants 2, par exemple de l'ordre de 1, 7 mm.

En relation avec les figures, l'empreinte supérieure 16 comprend deux portions 16a sur chacune desquelles une portée 8a de la came 8 est en appui lorsque ladite came est disposée sur ladite empreinte supérieure, lesdites portions étant disposées de part et d'autre de la deuxième extrémité 1b. Par ailleurs, le système comprend un ressort 17 de contrainte de la rondelle 15 en appui sur la came 8, ledit ressort étant disposé en appui entre la rondelle 15 et le montant 2 adjacent.

En particulier, les portions 16a de l'empreinte supérieure 16 présentent une asymétrie l'une par rapport à l'autre pour augmenter la surface d'appui de la came 8. Par ailleurs, pour faciliter le déplacement de la came 8 en position de serrage, ladite came peut être agencée de sorte que la force nécessaire à un tel déplacement soit inférieure à 200 N. De même, pour éviter tout déplacement intempestif de la came 8 en position desserrée, notamment lors de l'utilisation du vélo, ladite came peut être agencée de sorte que la force nécessaire à un tel déplacement soit supérieure à 50 N.

En outre, les portions 16a de l'empreinte supérieure 16 présentent une forme convexe afin d'empêcher le déplacement de la came 8 entre les empreintes 16, 18 lorsqu'elle est en position de serrage. En effet, un tel déplacement pourrait s'avérer dangereux pour la sécurité de l'utilisateur, en ce que la came 8 pourrait être déplacée en position de montage durant l'utilisation du vélo, notamment suite à un choc sur le levier 9, ce qui pourrait entrainer le détachement de l'accessoire du vélo.

Pour faciliter le montage ou le démontage de l'accessoire entre les montants 2, la rondelle 15 comprend en outre une empreinte inférieure 18 décalée angulairement par rapport à l'empreinte supérieure 16 et présentant une épaisseur inférieure à celle de ladite empreinte supérieure, la came 8 en position desserrée étant déplaçable réversiblement sur l'empreinte inférieure 18 par rotation du levier 9 suivant l'axe de la tige 1 dans une position de montage de l'accessoire du vélo.

Ainsi, en faisant tourner le levier 9 autour de l'axe de la tige 1 pour déplacer la came 8 dans l'empreinte supérieure 16 - respectivement inférieure 18 - l'utilisateur écarte - respectivement rapproche - la deuxième extrémité 1b par rapport à la rondelle 15, ce qui permet audit utilisateur de rattraper - respectivement créer - un jeu supplémentaire, par exemple de l'ordre de 5 mm, pour faciliter le serrage - respectivement le démontage - de l'accessoire entre les montants 2.

En particulier, lorsque le système est utilisé pour fixer une roue entre les montants 2 d'une fourche d'un vélo, ledit système peut être agencé de sorte que la force nécessaire pour démonter ladite roue des montants, lorsque la came 8 est disposée dans l'empreinte supérieure 16 et en position desserrée, et que le système de freinage est déconnecté de ladite roue, soit supérieure à 100 N, ladite force étant appliquée dans le sens de dépose de la roue.

La rondelle 15 comprend une base 19 qui présente une face extérieure sur laquelle les empreintes 16, 18 sont formées. En particulier, les empreintes 16, 18 peuvent être décalées angulairement, par exemple d'un angle de 90°, de sorte que l'utilisateur fasse tourner le levier 9 suivant un quart de tour autour de l'axe de la tige pour déplacer la came 8 entre lesdites empreintes.

En relation avec les figures, l'empreinte inférieure 18 comprend deux portions 18a sur chacune desquelles une portée 8a de la came 8 est en appui lorsque ladite came est disposée dans ladite empreinte inférieure, lesdites portions étant disposées de part et d'autre de la deuxième extrémité 1 b.

Pour permettre le déplacement de la came 8 entre les deux empreintes 16, 18, la rondelle 15 comprend sur sa face extérieure des rampes 20 disposées entre lesdites empreintes et sur chacune desquelles une portée 8a de ladite came est en contact glissant lors d'un tel déplacement.

La rondelle 15 comprend en outre un alésage 23 dans lequel la deuxième extrémité 1 1b est montée coulissante. L'alésage 23 comprend au moins un évidement 24 et la deuxième extrémité 1b comprend au moins une ailette 25 longitudinale qui est disposée dans l'évidement 24lorsque la came 8 est en position de serrage.

En relation avec les figures, l'alésage 23 comprend deux évidements 24 décalés angulairement, la deuxième extrémité 1b comprenant deux ailettes 25 longitudinales décalées angulairement qui sont disposées dans respectivement un évidement 24 lorsque la came est en position de serrage.

En outre, la longueur des ailettes 25 est agencée pour que lesdites ailettes restent engagées dans respectivement un évidement tant que la came 8 n'est pas totalement desserrée.

La coopération entre les ailettes 25 et les évidements 24 permet, lors du déplacement de la came entre les empreintes 16, 18, d'empêcher une rotation suivant un angle supérieur à l'angle mesuré entre lesdites empreintes, notamment pour éviter que l'utilisateur ne cherche à faire plusieurs tours. Ainsi, cette coopération permet de définir la course de rotation pour le déplacement de la came 8 entre les empreintes 16, 18, notamment dans un sens pour le déplacement de la came 8 de l'empreinte supérieure 16 vers l'empreinte inférieure 18 et dans le sens opposé pour le déplacement de la came 8 de l'empreinte inférieure 18 vers l'empreinte supérieure 16, et aussi de garantir le bon positionnement du levier 9 par rapport aux montants 2 de la fourche.

Pour éviter tout mouvement intempestif de la rondelle 15 lors du déplacement de la came 8 entre les deux empreintes 16, 18, ladite rondelle comprend en outre un ergot 26 agencé pour bloquer en rotation ladite rondelle par rapport au montant 2, ledit ergot étant formé sur une face intérieure de la base 19 de ladite rondelle. Ainsi, l'ergot 26 permet notamment à l'utilisateur de tourner le levier 9 sans avoir à maintenir la rondelle 15, ce qui lui permet de n'utiliser qu'une seule main pour mettre en oeuvre le système.

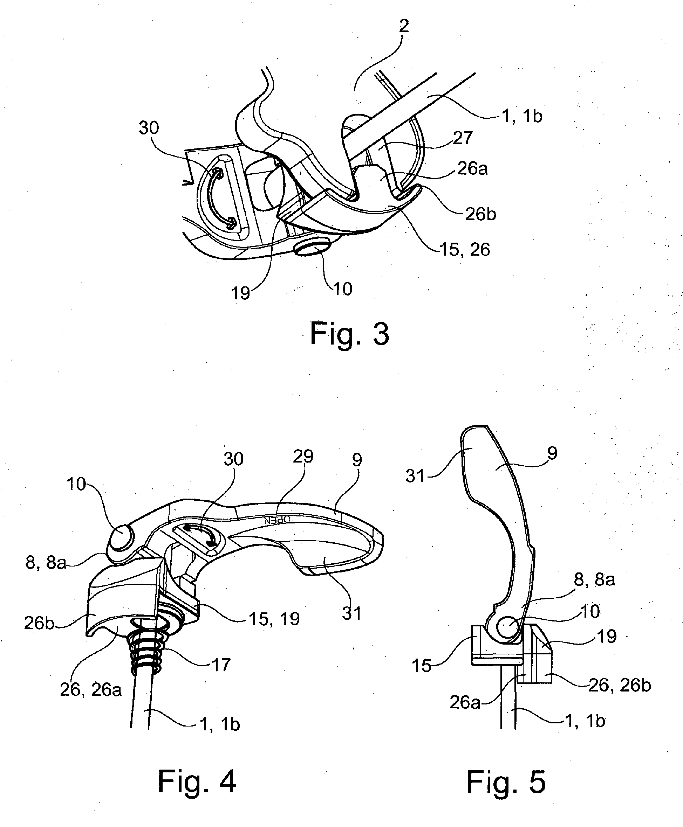

En relation avec les figures 2 et 3, le montant 2 adjacent à la rondelle 15 comprend une empreinte 27 de forme complémentaire à celle de l'ergot 26 afin de bloquer en rotation la rondelle 15 par rapport audit montant.

Par ailleurs, l'ergot 26 est agencé pour indexer la position de la rondelle 15 par rapport au montant 2. Pour ce faire, en relation avec les figures, l'ergot 26 comprend une base radiale 26a destinée à être disposée dans l'empreinte 27 du montant 2, ainsi qu'une paroi périphérique 26b qui s'étend de part et d'autre du bord extérieur de ladite base, afin de faciliter le positionnement de la base 26a dans l'empreinte 27 et d'éviter l'insertion de l'ergot 26 dans le mauvais sens.

Pour faciliter l'actionnement du système, le corps du levier 9 peut comprendre des inscriptions, par exemple réalisées par gravure, pour indiquer de façon visible à l'utilisateur la position dans laquelle la came 8 se trouve.

En relation avec les figures, le levier 9 comprend une inscription textuelle « CLOSE » 28 sur sa face extérieure qui est visible par l'utilisateur lorsque la came 8 est en position de serrage, ainsi qu'une inscription textuelle « OPEN » 29 sur sa face intérieure qui est visible par ledit utilisateur lorsque ladite came est en position desserrée.

De plus, le levier 9 comprend une inscription en forme de double flèche 30 sur sa face intérieure, ladite inscription n'étant visible que lorsque la came 8 est en position desserrée, afin d'indiquer à l'utilisateur le sens dans lequel il doit faire tourner ledit levier pour déplacer ladite came entre les empreintes 16, 18. Le levier 9 peut comprendre également une saillie 31 d'aide à la préhension, ladite saillie pouvant notamment être venue de matière avec le corps dudit levier.

## Revendications

1. Système de fixation d'un accessoire sur deux montants (2), ledit système comprenant une tige (1) destinée à être montée coulissante entre lesdits montants, ladite tige comprenant une extrémité (1b) pourvue d'un dispositif de serrage qui comprend un levier (9) à came (8) solidaire de l'extrémité (1b) de la tige (1) et une rondelle (15) montée autour de ladite extrémité, ladite rondelle présentant une empreinte supérieure (16) sur laquelle la came (8) est destinée à être disposée en appui, la came (8) étant agencée pour qu'une rotation du levier (9) suivant un axe perpendiculaire à celui de la tige (1) induise un déplacement de l'extrémité (1b) par rapport à la rondelle (15) entre une position de serrage et une position desserrée, ledit système étant **caractérisé en ce que** la rondelle (15) comprend une empreinte inférieure (18) décalée angulairement par rapport à l'empreinte supérieure (16) et présentant une épaisseur inférieure à celle de ladite empreinte supérieure, la came (8) en position desserrée étant déplaçable réversiblement sur l'empreinte inférieure (18) par rotation du levier (9) suivant l'axe de la tige (1) dans une position de montage de l'accessoire sur les montants (2).

2. Système selon la revendication 1, **caractérisé en ce que** la rondelle (15) comprend un ergot (26) agencé pour indexer la position de ladite rondelle par rapport au montant (2) et pour bloquer en rotation ladite rondelle par rapport audit montant.

3. Système selon la revendication 2, **caractérisé en ce que** la rondelle (15) comprend une base (19) qui présente une face extérieure sur laquelle les empreintes (16, 18) sont formées et une face intérieure sur laquelle l'ergot (26) est formé.

4. Système selon la revendication 2 ou 3, **caractérisé en ce que** l'ergot (26) comprend une base radiale (26a) et une paroi périphérique (26b) qui s'étend de part et d'autre du bord extérieur de ladite base, ladite paroi périphérique permettant d'indexer la position de la rondelle (15) par rapport au montant (2).

5. Système selon l'une quelconques des revendications 1 à 4, **caractérisé en ce que** la rondelle (15) comprend des rampes (20) disposées entre les deux empreintes (16, 18), la came (8) étant en contact glissant sur lesdites rampes lors de son déplacement entre les empreintes (16, 18).

6. Système selon l'une quelconque des revendications 1 à 5, **caractérisé en ce que** la rondelle (15) comprend un alésage (23) dans lequel la deuxième extrémité (1b) de la tige (1) est montée coulissante, ledit alésage comprenant au moins un évidement (24), ladite deuxième extrémité comprenant au moins une ailette (25) longitudinale qui est disposée dans l'évidement (24) de l'alésage (23) lorsque la came (8) est en position de serrage.

7. Système selon l'une quelconque des revendications 1 à 6, **caractérisé en ce que** la came (8) comprend deux portées (8a) en appui sur respectivement une portion (16a, 18a) d'une même empreinte (16, 18).

8. Système selon la revendication 7, **caractérisé en ce que** les portées (8a) sont disposées de part et d'autre de l'extrémité (1b) de la tige (1), les portions (16a, 18a) d'une même empreinte (16, 18) étant disposées de part et d'autre de ladite extrémité.

9. Système selon la revendication 7 ou 8, **caractérisé en ce que** les portions (16a) de l'empreinte supérieure (16) présentent une asymétrie l'une par rapport à l'autre pour augmenter la surface d'appui de la came (8).

10. Système selon l'une quelconque des revendications 1 à 9, **caractérisé en ce qu'il** comprend un ressort (17) de contrainte de la rondelle (15) en appui sur la came (8).

11. Système selon l'une quelconque des revendications 1 à 10, **caractérisé en ce que** la tige (1) est destinée à être montée dans le moyeu d'une roue de vélo pour permettre la fixation de ladite roue entre les montants (2) d'une fourche ou des haubans arrière dudit vélo.

12. Accessoire comprenant un système de fixation selon l'une quelconque des revendications 1 à 11, ledit accessoire étant monté sur la tige (1) pour pouvoir être fixé entre les montants (2).

13. Vélo comprenant deux montants (2) entre lesquels un accessoire selon la revendication 12 est fixé.

14. Vélo selon la revendication 13 lorsqu'elle dépend de la revendication 2, **caractérisé en ce que** l'un des montants (2) comprenant une empreinte (27) de forme complémentaire à celle de l'ergot (26) de la rondelle (15) afin de bloquer en rotation ladite rondelle par rapport audit montant.

## Patentansprüche

1. Befestigungssystem eines Zubehörteils auf zwei Ständern (2), wobei das System einen Schaft (1) umfasst, der dazu bestimmt ist, gleitend zwischen den Ständern montiert zu werden, wobei der Schaft ein Ende (1b) umfasst, das mit einer Spannvorrichtung versehen ist, die einen Hebel (9) mit Nocken (8) umfasst, der fest mit dem Ende (1b) des Schafts (1) verbunden ist, und eine Unterlegscheibe (15), die um das Ende montiert ist, wobei die Unterlegscheibe eine obere Abdruck (16) aufweist, auf der der Nocken (8) in Auflage sein soll, wobei der Nocken (8) eingerichtet ist, so dass eine Drehung des Hebels (9) entlang einer Achse senkrecht zu der des Schafts (1) eine Verlagerung des Endes (1b) in Bezug auf die Unterlegscheibe (15) zwischen einer Spannposition und einer entspannten Position veranlasst, System **dadurch gekennzeichnet, dass** die Unterlegscheibe (15) eine untere Abdruck (18) umfasst, die winkelig in Bezug auf die obere Abdruck (16) verlagert ist und eine Stärke aufweist, die kleiner ist als die der oberen Abdruck, wobei der Nocken (8) in entspannten Position umkehrbar auf der unteren Abdruck (18) durch Drehung des Hebels (9) entlang der Achse des Schafts (1) in eine Montageposition des Zubehörteils auf den Ständern (2) beweglich ist.

2. System nach Anspruch 1, **dadurch gekennzeichnet, dass** die Unterlegscheibe (15) einen Dorn (26) umfasst, der angeordnet ist, um die Position der Unterlegscheibe in Bezug auf den Ständer (2) zu positionieren und um die Unterlegscheibe in Bezug auf den Ständer in Drehung zu blockieren.

3. System nach Anspruch 2, **dadurch gekennzeichnet, dass** die Unterlegscheibe (15) eine Basis (19) umfasst, die eine Außenseite aufweist, auf der die Abdrücke (16, 18) ausgebildet sind, und eine Innenseite, auf der der Dorn (26) ausgebildet ist.

4. System nach Anspruch 2 oder 3, **dadurch gekennzeichnet, dass** der Dorn (26) eine radiale Basis (26a) und eine umfängliche Wand (26b) umfasst, die sich zu beiden Seiten des Außenrands der Basis erstreckt, wobei es die umfängliche Wand erlaubt, die Position der Unterlegscheibe (15) in Bezug auf den Ständer (2) zu positionieren.

5. System nach einem der Ansprüche 1 bis 4, **dadurch gekennzeichnet, dass** die Unterlegscheibe (15) Rampen (20) umfasst, die zwischen den zwei Abdrücken (16, 18) angeordnet sind, wobei der Nocken (8) bei seiner Bewegung zwischen den Abdrücken (16, 18) in gleitenden Kontakt auf den Rampen ist.

6. System nach einem der Ansprüche 1 bis 5, **dadurch gekennzeichnet, dass** die Unterlegscheibe (15) eine Bohrung (23) umfasst, in der das zweite Ende (1b) des Schafts (1) gleitend montiert ist, wobei die Bohrung mindestens eine Aussparung (24) umfasst, wobei das zweite Ende mindestens eine Längsrippe (25) umfasst, die in der Aussparung (24) der Bohrung (23) angeordnet ist, wenn der Nocken (8) in Spannposition ist.

7. System nach einem der Ansprüche 1 bis 6, **dadurch gekennzeichnet, dass** der Nocken (8) zwei Auflagen (8a) in Auflage jeweils auf einem Abschnitt (16a, 18a) ein und derselben Abdruck (16, 18) umfasst.

8. System nach Anspruch 7, **dadurch gekennzeichnet, dass** die Auflagen (8a) zu beiden Seiten des Endes (1b) des Schafts (1) angeordnet sind, wobei die Abschnitte (16a, 18a) ein und derselben Abdruck (16, 18) zu beiden Seiten des Endes angeordnet sind.

9. System nach Anspruch 7 oder 8, **dadurch gekennzeichnet, dass** die Abschnitte (16a) der oberen Abdruck (16) eine Asymmetrie in Bezug zueinander aufweisen, um die Auflageoberfläche des Nocken (8) zu erhöhen.

10. System nach einem der Ansprüche 1 bis 9, **dadurch gekennzeichnet, dass** es eine Spannfeder (17) der Unterlegscheibe (15) in Auflage auf dem Nocken (8) umfasst.

11. System nach einem der Ansprüche 1 bis 10, **dadurch gekennzeichnet, dass** der Schaft (1) dazu bestimmt ist, in die Nabe eines Fahrradrads montiert zu werden, um das Befestigen des Rads zwischen den zwei Ständern (2) einer Gabel oder hinteren Verankerungsdrähten des Fahrrads zu erlauben.

12. Zubehörteil, das ein Befestigungssystem nach einem der Ansprüche 1 bis 11 umfasst, wobei das Zubehörteil auf den Schaft (1) montiert ist, um zwischen den Ständern (2) befestigt werden zu können.

13. Fahrrad, das zwei Ständer (2) umfasst, zwischen welchen ein Zubehörteil gemäß Anspruch 12 befestigt ist.

14. Fahrrad nach Anspruch 13, wenn er von Anspruch 2 abhängt, **dadurch gekennzeichnet, dass** einer der Ständer (2) eine Abdruck (27) mit komplementärer Form zu der des Dorns (26) der Unterlegscheibe (15) umfasst, um die Unterlegscheibe in Bezug auf den Ständer in Drehung zu blockieren.

## Claims

1. System for fastening an accessory onto two posts (2), said system comprising a rod (1) intended to be mounted slidingly between said posts, said rod comprising an end (1 b) provided with a clamping device which comprises a cam (8) lever (9) attached to the end (1 b) of the rod (1) and a washer (15) mounted around said end, said washer having an upper imprint (16) whereon the cam (8) is intended to be arranged pressing against, the cam (8) being arranged so that a rotation of the lever (9) along an axis perpendicular to that of the rod (1) induces a displacement of the end (1 b) in relation to the washer (15) between a clamping position and an unclamped position, said system being **characterised in that** the washer (15) comprises a lower imprint (18) offset angularly in relation to the upper imprint (16) and having a thickness lower than that of said upper imprint, the cam (8) in unclamped position being able to be displaced reversibly on the lower imprint (18) by rotation of the lever (9) along the axis of the rod (1) in an assembly position of the accessory onto the posts (2).

2. System according to claim 1, **characterised in that** the washer (15) comprises a lug (26) arranged in order to index the position of said washer in relation to the post (2) and in order to block in rotation said washer in relation to said post.

3. System according to claim 2, **characterised in that** the washer (15) comprises a base (19) which has an outer surface whereon the imprints (16, 18) are formed and an inner surface whereon the lug (26) is formed.

4. System according to claim 2 or 3, **characterised in that** the lug (26) comprises a radial base (26a) and a peripheral wall (26b) which extends on either side of the outside edge of said base, said peripheral wall making it possible to index the position of the washer (15) in relation to the post (2).

5. System according to any of claims 1 to 4, **characterised in that** the washer (15) comprises ramps (20) arranged between the two imprints (16, 18), the cam (8) being in sliding contact on said ramps during its displacement between the imprints (16, 18).

6. System according to any of claims 1 to 5, **characterised in that** the washer (15) comprises a bore (23) wherein the second end (1 b) of the rod (1) is mounted slidingly, said bore comprising at least one recess (24), said second end comprising at least one longitudinal vane (25) which is arranged in the recess (24) of the bore (23) when the cam (8) is in clamping position.

7. System according to any of claims 1 to 6, **characterised in that** the cam (8) comprises two surfaces (8a) pressing respectively against a portion (16a, 18a) of a same imprint (16, 18).

8. System according to claim 7, **characterised in that** the surfaces (8a) are arranged on either side of the end (1 b) of the rod (1), the portions (16a, 18a) of the same imprint (16, 18) being arranged on either side of said end.

9. System according to claim 7 or 8, **characterised in that** the portions (16a) of the upper imprint (16) have an asymmetry in relation to one another in order to increase the pressing surface of the cam (8).

10. System according to any of claims 1 to 9, **characterised in that** it comprises a load spring (17) of the washer (15) pressing against the cam (8).

11. System according to any of claims 1 to 10, **characterised in that** the rod (1) is intended to be mounted in the hub of a bicycle wheel in order to allow for the fastening of said wheel between the posts (2) of a fork or of the rear seat stays of said bicycle.

12. Accessory comprising a system for fastening according to any of claims 1 to 11, said accessory being mounted onto the rod (1) in order to be fixed between the posts (2).

13. Bicycle comprising two posts (2) between which an accessory according to claim 12 is fixed.

14. Bicycle according to claim 13 when it depends on claim 2, **characterised in that** one of the posts (2) comprises an imprint (27) with a shape that is complementary to that of the lug (26) of the washer (15) in order to block in rotation said washer in relation to said post.
